# EUROPEAN PATENT APPLICATION

(11) **EP 2 384 931 A2**
(43) Date of publication of application: **09.11.2011**
(21) Application number: 11164759.0
(22) Date of filing: 04.05.2011
(51) Int. Cl.: B60Q 1/08, B60Q 1/14

(54) **Control device, vehicle lamp system, and vehicle lamp**

(30) Priority: 07.05.2010 JP 2010107101
(71) Applicant: Koito Manufacturing Co., Ltd., Tokyo 108-8711 (JP)
(72) Inventor: Tatara, Naoki, Shimizu-shi Shizuoka (JP)
(74) Representative: Grünecker, Kinkeldey, Stockmair & Schwanhäusser

(57) **Abstract**

A control device (50) includes an image detecting section (52) configured to receive image data of an image taken in front of a vehicle, and to detect the average brightness and the number of light spots of the image on the basis of the image data, an irradiation determination section (54) configured to determine an irradiation control method to be used for a vehicle lamp (70) based on both the brightness and the number of light spots, and an output section (58) configured to output a control signal to the vehicle lamp (70) so that the determined irradiation control method is performed.

## Description

### TECHNICAL FIELD

Apparatuses and devices consistent with the present invention relate to a technique that controls the irradiation state of a lamp on the basis of an image taken in front of a vehicle.

### BACKGROUND ART

In the past, there has been a vehicle headlight device including a swivel mechanism that makes the light distribution direction of a lamp unit swivel in the horizontal direction. In this vehicle headlight device, a swivel shaft of the lamp unit is supported by a bracket and the bracket is fixed to a lamp body. Accordingly, the lamp unit is mounted on the lamp body so as to be capable of swiveling in the horizontal direction. Further, there also has been proposed an ADB (Adaptive Driving Beam) system that detects a forward vehicle by processing an image (which is taken by a camera) and changes the irradiation direction of a high beam using the swivel mechanism while avoiding the forward vehicle so as to prevent glare (For example, Patent Documents 2 and 3).

### [Related art document]

### [Patent Document]

[Patent Document 1] JP-A-2009-179113
[Patent Document 2] JP-A-2009-227088
[Patent Document 3] JP-A-2010-000957

With respect to recognizing a forward vehicle at night, a method of recognizing a forward vehicle from light spots in an image taken by a camera can recognize a distant vehicle as compared to a radar system that uses a laser or a millimeter wave. For this reason, the method of recognizing a forward vehicle from light spots in an image taken by a camera is advantageous. Accordingly, as the above-mentioned vehicle headlight device, there are many vehicle headlight devices that are adapted to select an appropriate light distribution pattern or an irradiation direction by detecting the position of a forward vehicle from the image that is taken in front of a vehicle by a camera. However, a forward vehicle may not be accurately detected due to the influence of ambient light, such as from a street light or a delineator, in the image taken; the environmental illuminance around a traveling road; or the like. If the irradiation control method such as the above-mentioned ADB is used when a forward vehicle cannot be accurately detected, there is a concern that glare may be directed at the driver of the forward vehicle.

### SUMMARY

The invention has been made in consideration of the above-mentioned problem, and an object of the invention is to provide a technique that prevents an irradiation control method which directs glare to a forward vehicle from being selected due to the false detection of a forward vehicle in a vehicle lamp system that changes an irradiation control method on the basis of an image taken by a camera.

A control device according to a first aspect of the invention comprises:
an image detecting section configured to receive image data of an image taken in front of a vehicle, and to detect the average brightness and the number of light spots of the image on the basis of the image data;
an irradiation determination section configured to determine an irradiation control method to be used for a vehicle lamp based on both the brightness and the number of light spots; and
an output section configured to output a control signal to the vehicle lamp so that the determined irradiation control method is performed.

According to this aspect, since an irradiation control method for a vehicle lamp is determined with reference to both brightness and the number of light spots of a image taken, the possibility of selecting an inappropriate irradiation control method, which directs glare to a forward vehicle, is reduced as compared to when an irradiation control method is determined on the basis of only one of brightness and the number of light spots. As an irradiation control method to be selected, examples include changing a light distribution pattern, the adjusting of an irradiation direction, leveling, turning-on an auxiliary lamp, and the like.

The irradiation determination section may be configured to refer to a control map where a corresponding irradiation control method is designated for each of a plurality of areas formed on a two-dimensional map that has axes representing brightness and the number of light spots, respectively. According to this, it may be possible to form a more detailed control map by setting thresholds on the axes representing brightness and the number of light spots, as compared to a case where an irradiation control method is determined on the basis of only one of brightness and the number of light spots.

The irradiation determination section may include a control map where an irradiation control method having a low possibility of directing glare to a forward vehicle is designated for an area where brightness is higher than a predetermined value and the number of light spots is larger than a predetermined value. The irradiation determination section may include a control map where an irradiation control method to switch light distribution according to the position of a forward vehicle is designated for an area where brightness is lower than a predetermined value and the number of light spots is smaller than a predetermined value. In general, if the brightness of an image is high and the number of light spots is large, it is difficult to accurately detect a forward vehicle on the basis of the image taken. Accordingly, an irradiation control method, which has a low possibility of directing glare to a forward vehicle, is selected in this case. In contrast, if the brightness of an image is low and the number of light spots is small, it is easy to detect a forward vehicle from the image taken. Accordingly, an irradiation control method which actively switches light distribution according to the position of a forward vehicle is selected in this case.

A vehicle lamp system according to a second aspect of the invention comprises:
an imaging device configured to take an image in front of a vehicle;
a vehicle lamp configured to illuminates the front side of the vehicle according to a plurality of irradiation control methods; and
a control device configured to control the vehicle lamp,
wherein the control device includes
   an image detecting section configured to receive image data of the image taken in front of the vehicle and to detect the brightness and the number of light spots of the image on the basis of the image data,
   an irradiation determination section configured to determine an irradiation control method to be used for the vehicle lamp based on both the brightness and the number of light spots; and
   an output section configured to output a control signal to the vehicle lamp so that the determined irradiation control method is performed.

A vehicle lamp according to another aspect of the invention is configured to illuminate the front side of a vehicle according to irradiation control methods that are designated in advance based on brightness and the number of light spots detected from image data of an image taken in front of a vehicle.

According to exemplary embodiments of the invention, a technique that prevents an irradiation control method which directs glare to a forward vehicle from being selected due to the false detection of a forward vehicle in a vehicle lamp system that changes an irradiation control method on the basis of an image taken by a camera are provided.

### BRIEF DESCRIPTION OF THE DRAWINGS

Fig. 1 is a schematic cross-sectional view illustrating the internal structure of a headlight unit that is used for a vehicle lamp system according to an embodiment of the invention.
Fig. 2 is a schematic perspective view of a rotary shade.
Fig. 3 is a function block diagram showing the configuration of a vehicle lamp system.
Figs. 4A and 4B are views showing control maps of irradiation control methods in the related art.
Figs. 5A to 5D are views showing control maps of irradiation control methods according to the embodiment of the invention.

### DETAILED DESCRIPTION

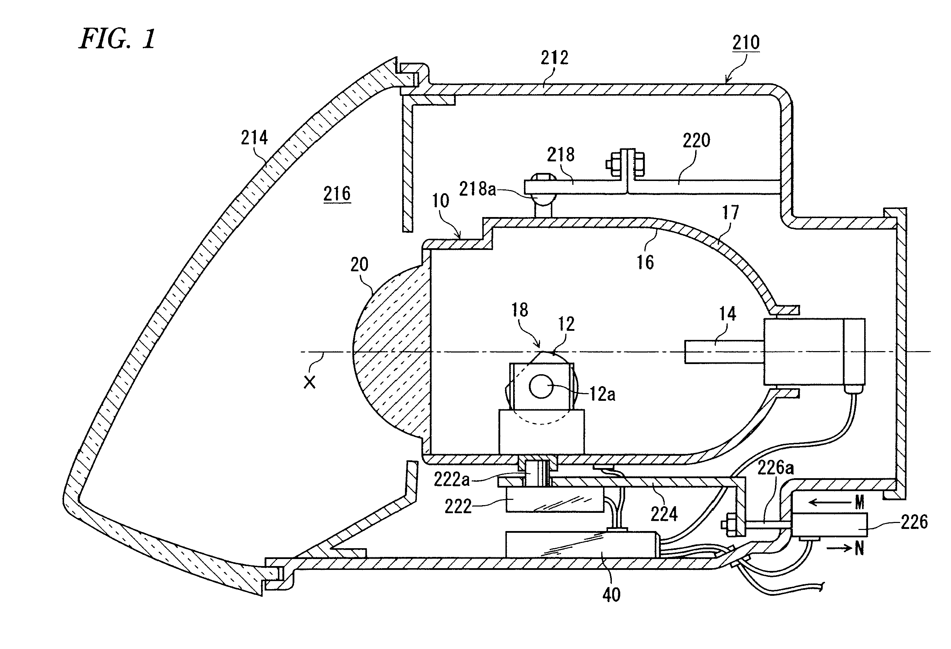

Fig. 1 is a schematic cross-sectional view illustrating the internal structure of a headlight unit 210 that is used for a vehicle lamp system 100 according to an embodiment of the invention. Fig. 1 shows a cross-section of the headlight unit 210 taken along a vertical plane, which includes an optical axis X of a lamp, as seen from the left side of the lamp. The headlight unit 210 is an adaptive front-lighting system that is disposed on each of the left and right portions of a vehicle in a vehicle width direction, and the structure of the headlight unit disposed on the right portion of the vehicle is substantially the same as that of the headlight unit disposed on the left portion of the vehicle. Accordingly, the headlight units disposed on the left and right portions of the vehicle will be described below without being particularly distinguished from each other.

The headlight unit 210 includes a lamp chamber 216. The lamp chamber 216 is formed by a lamp body 212 that includes an opening formed on the front side of the vehicle, and a transparent cover 214 that covers the opening of the lamp body 212. A lamp unit 10, which irradiates light to the front side of the vehicle, is received in the lamp chamber 216. A lamp bracket 218, which includes a pivot mechanism 218a serving as a swiveling center of the lamp unit 10, is formed at a part of the lamp unit 10. The lamp bracket 218 is connected to a body bracket 220, which is erected on an inner wall surface of the lamp body 212, by fastening members such as screws. Accordingly, the lamp unit 10 is fixed at a predetermined position in the lamp chamber 216, and may swivel about the pivot mechanism 218a so that the posture of the lamp unit is changed to, for example, a forward inclined posture or a backward inclined posture.

Further, a rotating shaft 222a of a swivel actuator 222 (that forms an adaptive front-lighting system (AFS) for a curved road, which illuminates in the traveling direction while a vehicle travels on a curved road) is fixed to the lower surface of the lamp unit 10. The swivel actuator 222 makes the lamp unit 10 swivel about the pivot mechanism 218a in the traveling direction on the basis of the steering angle data provided from the vehicle, the shape data of a traveling road provided from a navigation system, and a relative positional relationship between the subject vehicle and a front vehicle, and the like. As a result, the irradiation region of the lamp unit 10 does not face directly in front of the vehicle but along a curved in the road, so that driver's forward field of view is improved. The swivel actuator 222 may be formed of, for example, a stepping motor. Meanwhile, if a swivel angle has a fixed value, a solenoid or the like may also be used as the swivel actuator.

The swivel actuator 222 is fixed to a unit bracket 224. A leveling actuator 226, which is disposed outside the lamp body 212, is connected to the unit bracket 224. The leveling actuator 226 is formed of, for example, a motor or the like that pushes and pulls a rod 226a in the directions of arrows M and N. If the rod 226a is pushed in the direction of the arrow M, the lamp unit 10 swivels about the pivot mechanism 218a so as to be in the backward inclined posture. In contrast, if the rod 226a is pulled in the direction of the arrow N, the lamp unit 10 swivels about the pivot mechanism 218a so as to be in the forward inclined posture. When the lamp unit 10 is in the backward inclined posture, it may be possible to perform leveling adjustment that makes the optical axis be directed to the upper side. Further, when the lamp unit 10 is in the forward inclined posture, it may be possible to perform leveling adjustment that makes the optical axis be directed to the lower side. As described above, it may be possible to adjust the optical axis according to the posture of the vehicle by performing the leveling adjustment. As a result, it may be possible to adjust the range of light, which is irradiated forward from the headlight unit 210, to the optimum distance.

A lamp controller 40, which controls the turning-on/off of the lamp unit 10 or controls the formation of a light distribution pattern, is disposed on the inner wall surface of the lamp chamber 216, for example, below the lamp unit 10. The lamp controller 40 also controls the swivel actuator 222, the leveling actuator 226, and the like.

The lamp unit 10 includes a shade mechanism 18 including a rotary shade 12, a bulb 14 as a light source, a lamp housing 17 that supports a reflector 16 on an inner wall thereof, and a projection lens 20. For example, an incandescent bulb, a halogen lamp, a discharge bulb, an LED, or the like may be used as the bulb 14. In this embodiment, the bulb 14 is formed of a halogen lamp as an example. The reflector 16 reflects light that is emitted from the bulb 14. Further, a part of the light emitted from the bulb 14 and the light reflected by the reflector 16 are guided to the projection lens 20 through the rotary shade 12 of the shade mechanism 18.

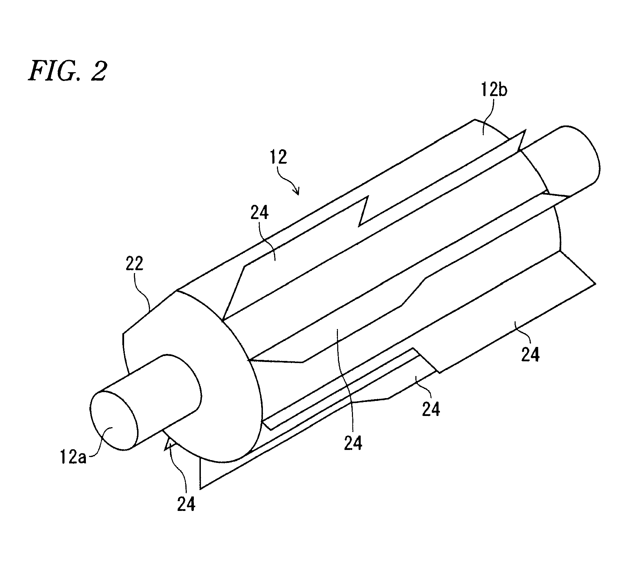

Fig. 2 is a schematic perspective view of the rotary shade 12. The rotary shade 12 is a cylindrical member that is rotated about a rotating shaft 12a by a shade rotating motor. Moreover, the rotary shade 12 includes a cutout portion 22 that is formed by cutting a part of the rotary shade in an axial direction, and holds a plurality of plate-like shade plates 24 on the outer peripheral surface 12b thereof except for the cutout portion 22. The rotary shade 12 can move one of the cutout portion 22 and the shade plates 24 to a position on a rear focal plane, which includes the rear focus of the projection lens 20, according to the rotation angle thereof. Further, a light distribution pattern is formed so as to correspond to the shape of an edge portion of the shade plate 24, which is positioned on the optical axis X, according to the rotation angle of the rotary shade 12. For example, when one of shade plates 24 of the rotary shade 12 is moved onto the optical axis X and blocks a part of light emitted from the bulb 14, a low beam light distribution pattern or a light distribution pattern that partially has the characteristics of the low beam light distribution pattern is formed. Further, when the cutout portion 22 is moved onto the optical axis X and the light emitted from the bulb 14 is not blocked, a high beam light distribution pattern is formed.

The rotary shade 12 can be rotated by the driving of, for example, a motor. Accordingly, the rotary shade 12 moves the shade plate 24 or the cutout portion 22, which forms a desired light distribution pattern, onto the optical axis X by the control of the rotation angle of the motor. Meanwhile, the cutout portion 22 formed on the outer peripheral surface 12b of the rotary shade 12 may be omitted so that the rotary shade 12 has only a function of blocking light. Further, in order to form a high beam light distribution pattern, the rotary shade 12 may retreat from the position on the optical axis X by the driving of, for example, a solenoid or the like. Due to this structure, a low beam light distribution pattern or a light distribution pattern similar to the low beam light distribution pattern is fixed even though, for example, a motor rotating the rotary shade 12 fails. That is, it may be possible to achieve a fail-safe function by reliably avoiding the rotary shade 12 being fixed at a posture where a high beam light distribution pattern is formed.

The projection lens 20 is disposed on the optical axis X extending in the longitudinal direction of the vehicle, and the bulb 14 is disposed on the rear side of the rear focal plane of the projection lens 20. The projection lens 20 is a plano-convex aspheric lens of which the front surface is a convex surface and the rear surface is a flat surface. The projection lens projects a light source image, which is formed on the rear focal plane, onto a virtual vertical screen, which is formed on the front side of the lamp unit 10, as an inverted image.

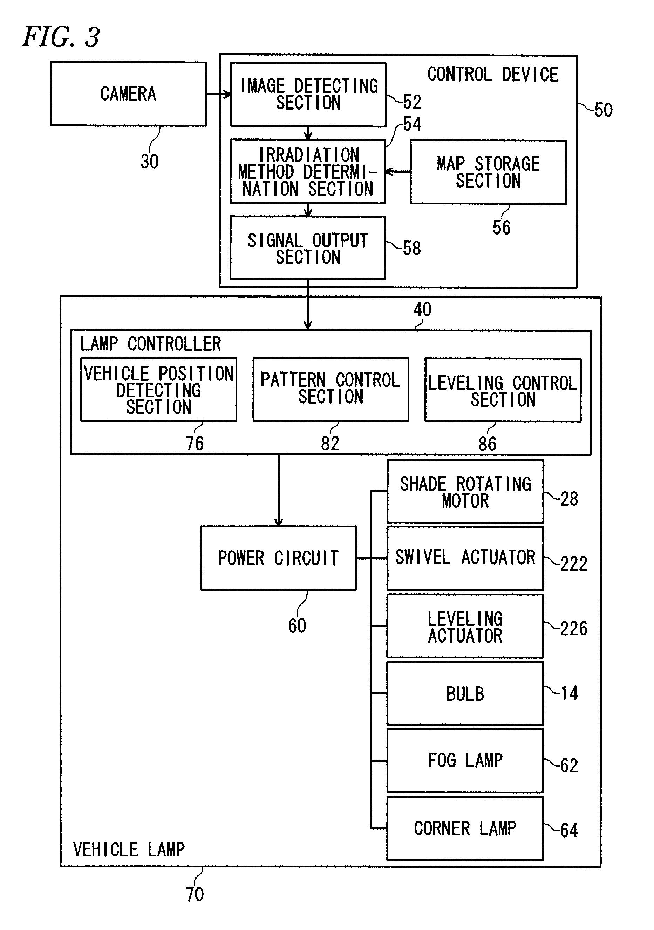

Fig. 3 is view showing the configuration of a vehicle lamp system 100. The vehicle lamp system 100 includes a vehicle lamp 70 that includes the headlight unit 210 having the above-mentioned structure, a camera 30 that is disposed in the vehicle so as to take an image in front of the vehicle, and a control device 50 that controls an irradiation control method of the vehicle lamp 70.

In Fig. 2, respective blocks of the control device 50 and the lamp controller 40 are achieved by elements, such as a CPU, a memory, and the like of a computer in terms of hardware, and are achieved by computer programs and the like loaded in a memory in terms of software. However, here, the respective blocks are shown as functional blocks that are achieved by interaction between them. Accordingly, it is understood by those skilled in the art that these functional blocks are achieved in various forms by the combination of hardware and software.

The camera 30 is provided at the front portion of the vehicle as means for recognizing an object in order to detect objects, such as forward vehicles, oncoming vehicles, or pedestrians. The camera 30 may be a camera that is exclusively used for the control of the control device 50, and may be a camera that is common to other systems.

The control device 50 designates an appropriate irradiation control method to the vehicle lamp 70 on the basis of an image taken by the camera 30. The control device 50 includes an image detecting section 52, an irradiation method determination section 54, a map storage section 56, and a signal output section 58.

The image detecting section 52 receives image data of the image, which is taken in front of the vehicle, from the camera 30, and obtains the average brightness and the number of light spots of the image on the basis of the image data. The average brightness is obtained by averaging the brightness values of respective pixels of the image. Meanwhile, not the average brightness of the entire image taken but the average brightness of the area of a part of the image may be obtained. For example, the average brightness of the central area of the image taken, which is obtained by removing a peripheral portion having a predetermined length from the image taken, may be calculated. The number of light spots is obtained by counting the number of portions, which have a brightness value equal to or higher than a predetermined value, among the respective pixels of the image. Meanwhile, an arbitrary method may be used as a method of obtaining the average brightness or the number of light spots from the taken image.

The map storage section 56 stores a control map where a corresponding irradiation control method is designated to each of the areas formed on a two-dimensional map having two axes representing the brightness and the number of light spots. In this control map, an irradiation control method, which has a low possibility of directing glare to a forward vehicle, is designated to an area where brightness is higher than a predetermined value and the number of light spots is large and an irradiation control method, which switches light distribution according to the position of a forward vehicle, is designated to an area where brightness is lower than a predetermined value and the number of light spots is small.

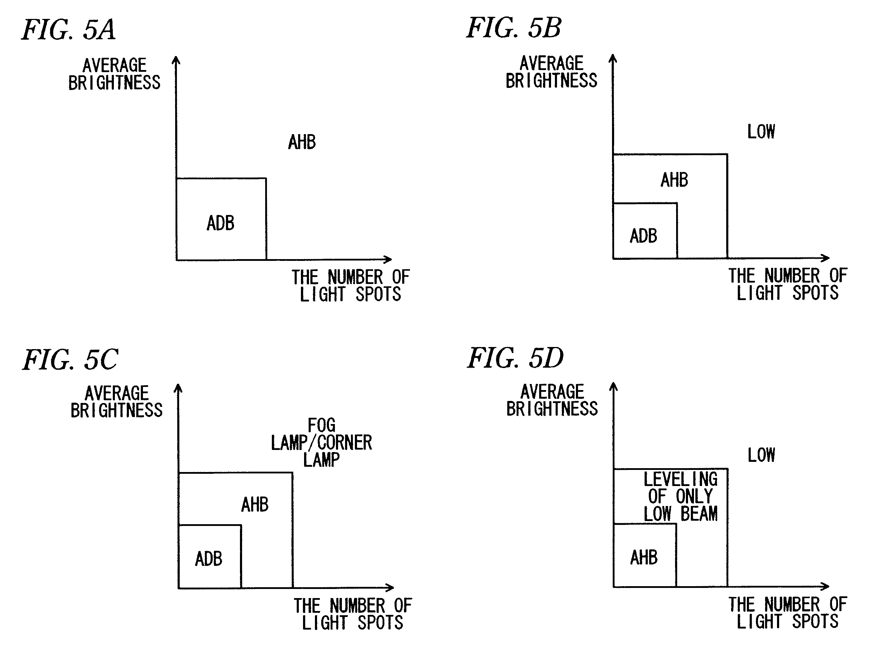

Meanwhile, specific examples of the control map will be described below with reference to Fig. 5.

The irradiation method determination section 54 determines an irradiation control method for the vehicle lamp 70 by applying both the average brightness and the number of light spots, which are obtained by the image detecting section 52, to the control map stored in the map storage section 56.

The signal output section 58 outputs a corresponding control signal to the lamp controller 40 of the vehicle lamp so that the irradiation control method determined by the irradiation method determination section 54 is performed.

The lamp controller 40 of the vehicle lamp 70 receives a signal from the control device 50, and controls the respective parts of the vehicle lamp 70 so that the determined irradiation control method is achieved. The lamp controller 40 includes a vehicle position detecting section 76, a pattern control section 82, and a leveling control section 86. Further, the shade rotating motor 28, the swivel actuator 222, the leveling actuator 226, the bulb 14, a fog lamp 62, and a corner lamp 64 of the vehicle lamp are adapted to be controlled by the lamp controller 40 through a power circuit 60.

The vehicle position detecting section 76 receives the image data of the image, which is taken by the camera 30, from the control device 50, and detects the position of a forward vehicle by searching for feature points, which represent a vehicle, from the image data.

The pattern control section 82 determines whether the forward vehicle detected by the vehicle position detecting section 76 exists and determines the light distribution patterns of the left and right headlight units 210 in order to illuminate the front side of the vehicle with the optimum light distribution pattern according to the change of the position of the forward vehicle. Moreover, the shade rotating motor 28 and the swivel actuator 222 are controlled through the power circuit 60 so that the determined light distribution pattern is made.

For example, if a preceding vehicle or an oncoming vehicle is detected on the front side of the subject vehicle, the pattern control section 82 discriminates that a low beam combined light distribution pattern should be formed so as to prevent glare. Further, the pattern control section 82 drives the shade rotating motors 28 of the left and right headlight units 210 by a predetermined amount, and forms a low beam combined light distribution pattern that blocks a predetermined amount of light emitted from the bulb 14 by the rotary shade 12.

Furthermore, if a preceding vehicle or an oncoming vehicle is not detected on the front side of the subject vehicle, the pattern control section 82 discriminates that a high beam combined light distribution pattern having a wide irradiation range should be formed so as to improve the driver's field of view. Moreover, the pattern control section 82 drives the shade rotating motors 28 of the left and right headlight units 210 by a predetermined amount, and forms a high beam combined light distribution pattern that does not block light by the rotary shade 12.

Further, if a forward vehicle does not exist and an oncoming vehicle or a pedestrian exists in a region where vehicles and pedestrians keep to the left according to a traffic regulation, the pattern control section 82 discriminates that a left-side high combined light distribution pattern, which is a special high beam light distribution pattern irradiating a high beam only on a traveling lane side, should be formed. Furthermore, if only a forward vehicle exists and an oncoming vehicle or a pedestrian does not exist in the region, the pattern control section 82 discriminates that a right-side high combined light distribution pattern, which is a special high beam light distribution pattern irradiating a high beam only on the opposite lane side, should be formed. Moreover, the pattern control section 82 drives the shade rotating motors 28 of the left and right headlight units 210 by a predetermined amount, and forms the respective side high combined light distribution patterns.

Since the ADB (Adaptive Driving Beam) system itself responding to a forward vehicle is well known, a more detailed description thereof will be omitted in this specification.

In addition, the pattern control section 82 does not perform the above-mentioned ADB but may form a light distribution pattern so that a high beam and a low beam are selectively used according to whether a forward vehicle exists. Since such an AHB (Auto High Beam) system itself responding to whether a forward vehicle exists is well known, a more detailed description thereof will be omitted in this specification.

The leveling control section 86 determines whether the forward vehicle detected by the vehicle position detecting section 76 exists and determines the leveling of the light distribution patterns of the left and right headlight units 210 in order to illuminate the front side of the vehicle in the optimum direction of the optical axis according to the change of the position of the forward vehicle. Further, the leveling control section 86 controls the leveling actuator 226 through the power circuit 60 so that the optical axis is directed to the determined direction of the optical axis.

When the lamp controller 40 receives a signal instructing an auxiliary lamp, such as a fog lamp or a corner lamp, to be turned on from the control device 50, the lamp controller 40 turns on the fog lamp 62 or the corner lamp 64 through the power circuit 60.

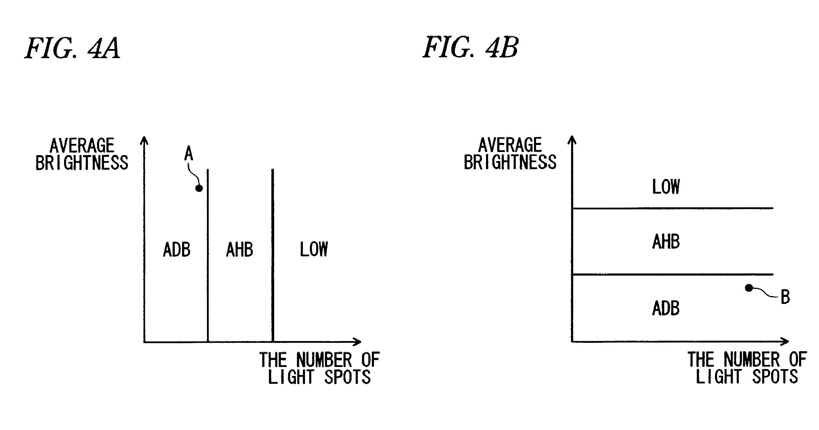

Figs. 4A and 4B show examples of a control map in the related art. Fig. 4A shows a control map that determines an irradiation control method on the basis of only the number of light spots. If the number of light spots is small, as shown in Fig. 4A, there is a high possibility that a forward vehicle can be correctly detected. Accordingly, an irradiation control method of actively controlling a light distribution pattern or an irradiation direction like ADB is employed. If the number of light spots is large, there is a high possibility that the position of a forward vehicle is falsely detected. Accordingly, an irradiation control method is employed that has a low possibility of directing glare to a driver of a forward vehicle, like, for example, a low beam.

However, if an irradiation control method is determined on the basis of only the number of light spots as described above, an inappropriate irradiation control method may be selected. For example, if the average brightness of the image taken is high like at twilight (for example, in the case of a point A in Fig. 4A), it is difficult to accurately detect the number of light spots of the image. Accordingly, there is a possibility of deciding the following irradiation control method. That is, in this irradiation control method, light spots, which do not correspond to a forward vehicle, among a plurality of light spots are recognized as a vehicle and glare is directed.

Further, Fig. 4B shows a control map that determines an irradiation control method on the basis of only the average brightness of the image taken. If the average brightness is low and a screen is dark as a whole, as shown in Fig. 4B, there is a high possibility of a forward vehicle being correctly detected. Accordingly, an irradiation control method of actively controlling a light distribution pattern or an irradiation direction like in ADB is employed. If the average brightness is high and a screen is bright as a whole, there is a high possibility of the position of a forward vehicle being falsely detected. Accordingly, an irradiation control method is employed that has a low possibility of directing glare to a driver of a forward vehicle, like, for example, a low beam.

However, if an irradiation control method is determined on the basis of only the average brightness of the image taken as described above, an inappropriate irradiation control method may be selected. For example, if a plurality of light spots exists in the image but the brightness of each of the light spots is low (for example, in the case of a point B in Fig. 4B), the average brightness is also low. In this case, if discrimination is made on the basis of only the average brightness, there is a possibility of deciding on the following irradiation control method. That is, in this irradiation control method, light spots, which do not correspond to a forward vehicle, among a plurality of light spots are recognized as a vehicle and glare is directed.

Accordingly, in this embodiment, an irradiation control method for the vehicle lamp is determined using a control map that is based on both the average brightness and the number of light spots of the image taken.

Figs. 5A to 5D show maps of the irradiation control method of this embodiment.

Fig. 5A shows an example of a control map when an irradiation control method to be selected is two kinds. As shown in Fig. 5A, a horizontal axis represents the number of light spots and a vertical axis represents the average brightness. In this example, if the number of light spots is small, the average brightness is low, and it is possible to relatively accurately detect a forward vehicle from a image taken, an ADB is selected that actively controls a light distribution pattern or an irradiation direction. If the number of light spots is large, the average brightness is high, and it is difficult to accurately detect a forward vehicle from an image taken, an AHB is selected that has a low possibility of directing glare to a forward vehicle as compared to ADB.

Fig. 5B shows an example of a control map when an irradiation control method to be selected is three kinds. As in shown in Fig. 5A, a horizontal axis represents the number of light spots and a vertical axis represents the average brightness. If the number of light spots is relatively small, the average brightness is relatively low, and it is possible to relatively accurately detect a forward vehicle from an image taken, the ADB is selected that actively controls a light distribution pattern or an irradiation direction. If both the number of light spots and the average brightness are moderate, AHB is selected that has a low possibility of directing glare to a forward vehicle as compared to ADB. If the number of light spots is further large and the average brightness is further high, a low beam is selected that does not have a possibility of directing glare to a forward vehicle.

Fig. 5C shows another example of a control map when an irradiation control method to be selected is from three kinds. In this example, the turning-on of an auxiliary lamp, such as a fog lamp or a corner lamp, is selected instead of a low beam in comparison with Fig. 5B.

Fig. 5D shows still another example of a control map when there are three kinds of irradiation control method that can be selected. In this example, the leveling using only a low beam is selected instead of AHB in comparison with Fig. 5B.

In the control maps shown in Figs. 5A to 5D, the boundaries of sections of each irradiation control method are parallel to the horizontal axis or the vertical axis. However, these boundaries may be inclined to the horizontal axis or the vertical axis. Further, the boundaries of sections may be curved lines instead of straight lines. For example, the boundaries may be formed of a quadrant that has the origin as the center thereof.

Furthermore, an irradiation control method to be set on the control map may be four or more kinds. As long as an irradiation control method having a high possibility of directing glare and an irradiation control method having a low possibility of directing glare are arranged in the control map in this order from the small number of light spots and low average brightness to the large number of light spots and high average brightness, the kinds and number of irradiation control methods are not limited.

Meanwhile, even in any example of the control map, thresholds, where the respective control methods are switched, on the axes representing the number of light spots and the average brightness may be determined using an arbitrary reference. For example, a recognition rate where a forward vehicle can be accurately recognized from an image taken may be used as a threshold. Referring to Fig. 5B, a threshold between ADB and AHB may be set to a recognition rate of 80% on each of the axes representing the number of light spots and the average brightness and a threshold between AHB and a low beam may be set to a recognition rate of 60% on each of the axes representing the number of light spots and the average brightness. These percentage values can be determined through simulations or experiments using an actual vehicle. The threshold on the axis representing the number of light spots may be different from that on the axis representing the average brightness.

As described above, according to this embodiment, in a vehicle lamp system having a function of changing the light distribution direction or the light distribution pattern of a headlight on the basis of the position of a forward vehicle detected from an image that is taken in front of a vehicle, a control map deciding which method is selected from a plurality of irradiation control methods is formed of a two-dimensional map that has two axes representing the average brightness of a image taken and the number of light spots of a image taken. Accordingly, it may be possible to prevent an inappropriate irradiation control method from being selected due to the false detection of a forward vehicle from an image taken. As a result, it may be possible to reduce the possibility of glare being directed at a forward vehicle.

The invention is not limited to the above-mentioned embodiments. The respective embodiments may be combined with each other, or modifications such as various kinds of design changes may be made on the basis of the knowledge of those skilled in the art. Accordingly, embodiments to which the combination or the modifications are applied are also included in the scope of the invention. New embodiments, which are formed by the combination of the above-mentioned embodiments and the combination of each of the above-mentioned embodiments and the following modifications, have the advantages of the embodiments and modifications to be combined.

If the number of light spots of a image taken is equal to or larger than a predetermined value or the average brightness of a image taken is equal to or larger than a predetermined value, the irradiation method determination section determines to make a headlight unit irradiate in an energy saving mode where light is wholly or partially reduced and the signal output section may be adapted to output a control signal, which makes the headlight unit irradiate in the energy saving mode, to the lamp controller.

## Claims

1. A control device comprising:
an image detecting section configured to receive image data of an image taken in front of a vehicle, and to detect the average brightness and the number of light spots of the image on the basis of the image data;
an irradiation determination section configured to determine an irradiation control method to be used for a vehicle lamp based on both the brightness and the number of light spots; and
an output section configured to output a control signal to the vehicle lamp so that the determined irradiation control method is performed.

2. The control device according to claim 1,
wherein the irradiation determination section is configured to refer to a control map where a corresponding irradiation control method is designated for each of a plurality of areas formed on a two-dimensional map that has axes representing brightness and the number of light spots, respectively.

3. The control device according to claim 2,
wherein the irradiation determination section includes a control map where an irradiation control method having a low possibility of directing glare to a forward vehicle is designated for an area where brightness is higher than a predetermined value and the number of light spots is larger than a predetermined value.

4. The control device according to claim 2 or 3,
wherein the irradiation determination section includes a control map where an irradiation control method to switch light distribution according to the position of a forward vehicle is designated for an area where brightness is lower than a predetermined value and the number of light spots is smaller than a predetermined value.

5. A vehicle lamp system comprising:
an imaging device configured to take an image in front of a vehicle;
a vehicle lamp configured to illuminates the front side of the vehicle according to a plurality of irradiation control methods; and
a control device according to claim 1 configured to control the vehicle lamp.

6. A vehicle lamp configured to illuminate the front side of a vehicle according to irradiation control methods that are designated in advance based on brightness and the number of light spots detected from image data of an image taken in front of a vehicle.
